# EUROPEAN PATENT SPECIFICATION

(11) **EP 4 581 040 B1**
(45) Date of publication and mention of the grant of the patent: **24.06.2026**
(21) Application number: 23758319.0
(22) Date of filing: 21.08.2023
(51) Int. Cl.: C07F 9/32, C08G 59/00, C08K 5/00, C08L 63/00, C08G 18/16, C08G 18/18, C08G 18/20, C08G 18/24, C08G 18/48, C08G 18/66, C08G 65/26, C08K 5/5313, C08G 18/38, C08G 18/42, C08G 18/76, C08G 65/22

(54) **PHOSPHINATE FLAME RETARDANT AND PROCESS FOR MANUFACTURE THEREOF**
PHOSPHINATFLAMMSCHUTZMITTEL UND VERFAHREN ZU SEINER HERSTELLUNG
RETARDATEUR DE FLAMME À BASE DE PHOSPHINATE ET SON PROCÉDÉ DE FABRICATION

(30) Priority: 02.09.2022 EP 22193589
(43) Date of publication of application: 09.07.2025
(73) Proprietor: CLARIANT INTERNATIONAL LTD, 4132 Muttenz (CH)
(72) Inventor: HAUENSTEIN, Oliver, 50354 Hürth (DE); SICKEN, Martin, 50354 Hürth (DE); CLAUSEN, Florian, 50354 Hürth (DE); SCHLUNDT, Waldemar, 50354 Hürth (DE); BERGER, Matthias, 50354 Hürth (DE); HUTHMACHER, Elke, 50354 Hürth (DE); KRUCKENBERG, Achim, 50354 Hürth (DE)
(74) Representative: Zusammenschluss Clariant
(86) International application number: PCT/EP2023/072904
(87) International publication number: WO 2024/046794

(56) References cited:
- WO-A1-2014/206487
- CN-A- 111 560 037
- OU YINGCONG ET AL: "A phosphoryl radical-initiated Atherton-Todd-type reaction under open air", CHEMICAL COMMUNICATIONS, vol. 56, no. 9, 20 December 2019 (2019-12-20), UK, pages 1357 - 1360, XP093018369, ISSN: 1359-7345, DOI: 10.1039/C9CC09407E

## Description

The present invention relates to a particular type of phosphinate, which is obtainable or obtained by reacting at least a phosphinic acid of formula (I) with an oxirane of formula (II) as defined hereinbelow. The present invention also relates to a process for manufacturing a phosphinate, which comprises reacting at least a phosphinic acid of formula (I) with an oxirane of formula (II) as defined hereinbelow. Furthermore, the present invention relates to the uses of a phosphinate thus made as flame retardant for polymers and polymer foams, a process to prepare flame-retardant polymer using said phosphinate as a starting material, and a flame-retardant polymer composition comprising a polymer and the invented phosphinate as is.

It is known that the flame retardancy of polymers and polymer foams can be achieved by addition of various substances. Most of these flame retardant substances are halogenated, especially brominated organic compounds. Another commonly used halogenated flame retardant is TCPP (tris (1-chloro-2-propyl) phosphate), which is often incorporated in polyurethane foam in consumer products and in home insulation, as well as in electronics. However, despite providing an effective flame retardancy, TCPP is not chemically bound with the polymer foam and could escape over time into the environment, causing negative toxicological and ecotoxicological impacts. In addition, leaching of the TCPP flame retardant causes the overall flame retardant effectiveness to diminish over time. Therefore, continuous effects have been made to find alternative non-halogenated, and preferably chemically reactive, flame retardants for polymers and polymer foams.

One class of such non-halogenated flame retardants for polymer or foam uses are phosphorus based and include some reactive options. Judging by their phosphorous-oxidation state, these phosphorus-based flame retardants may be phosphates, phosphonates or phosphinates, each containing phosphorus-oxygen-carbon bonds, i.e. ester linkages.

US 4 458 035 describes oligomeric phosphate flame retardant for polyurethane foams, and said phosphate is of the formula (1) below in which
- n: is 0 to 10,
- R: is an C₁-C₁₀ (halo)alkyl radical and

R₁ and R₂ are hydrogen atoms or C₁-C₁₀ (halo)alkyl radicals.

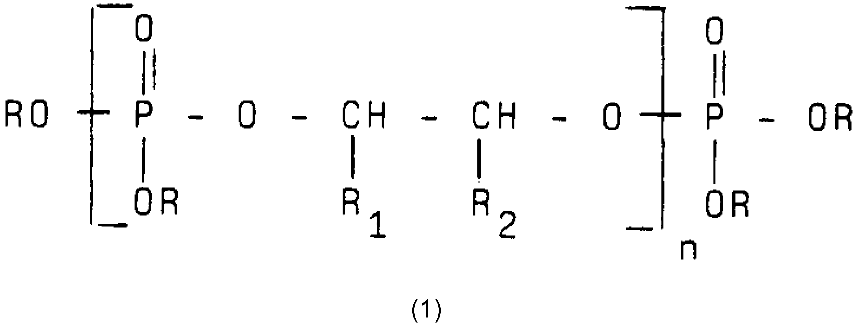

EP 0 658 580 describes a different type of reactive phosphate flame retardant used for polyurethane, and said reactive flame retardant is of the formula (2) below 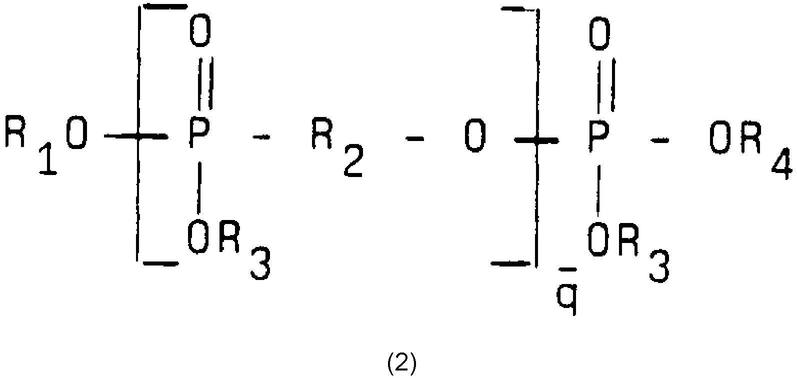 in which
- q: denotes an average chain length of 0.5 to 10,
- R₁: denotes a specific hydroxyl-containing radical of the formula (2-a) where R₇ is H,
- R₂: is a radical of the formula (2-b)
- R₃: 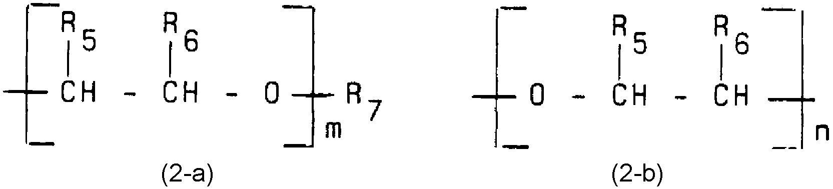 is a radical of the formula (2-a) where R₇ is C₁-C₆, R₄ is R₁ or R₃; R₅, R₆ and R₇ are an H atom or an alkyl radical having 1 to 6 carbon atoms,
- m: is 0 to 4 and
- n: is 1 to 4.

US 7 288 577 describes blends of two different phosphate flame retardants for polyurethane, consisting essentially of:
(a) 50 percent by weight, of the blend, of butylated triphenyl phosphate and
(b) 50 percent by weight, of the blend, of poly(ethylethyleneoxy) phosphate. WO 2014 206487 A1 describes aromatic phosphonate flame retardant compounds for cured epoxy resin compositions, and such resin compositions can be used as an adhesive, for manufacturing of electronic circuit components, or for making structural elements for the transportation and building industry. According to WO 2014 206487 A1, said phosphonate flame retardant compounds could be a phosphonate ester with hydroxyalkyl groups. Phosphoryl radical-initiated Atherton-Todd-type reactions are disclosed in Chem.Commun.,2020,56,1357-1360.

Although the foregoing patent disclosures may have mentioned some efficient and well used reactive phosphorus-based flame retardants, their inherent phosphorus-oxygen-carbon bonds (i.e. ester linkages) could be prone to hydrolysis under humid condition, which in turn leads to adverse influences on polymerization process or final polymer properties. Particularly, it is known that hydrolytically formed acid could deactivate polymerization catalyst during foaming process, and further cleave the covalent bonds in the polymer foam product, thereby destroying the intended 3-D foam network.

Moreover, to meet the industrial requirements for polymer manufacturing process, the reactive flame retardants need to be compatible with the monomer reactant(s) and, as a preferred feature, may be stably stored with at least one monomer reactant on the shelf or in transportation. Such compatibility requirements have eliminated the feasibility of many reactive phosphorous flame retardants for polymer, which are otherwise very effective in flame retardancy.

Another important parameter to consider for flame retardants in polymer application is their emission property. For instance, one major application for flame-retardant flexible polyurethane foams is seat liners or head liners in the automotive sector, which demands a very low quantity of semi-volatile condensable emissions (FOG) and minimized volatile organic components (VOC) in the user environment.

It is therefore an object of the present invention to provide halogen-free, reactive flame-retardant which exhibits hydrolytic stability in humid condition, can be used to prepare effective flame-retardant polymers or flame-retardant polymer compositions with low FOG/VOC emission and without reactant compatibility issues.

Another object of the present invention is the provision of a flame-retardant polymer or polymer composition which combines excellent flame retardancy, very low FOG/VOC emission, and hydrolytic stability at elevated temperatures.

These objects are achieved by a phosphinate obtainable or obtained by reacting at least a phosphinic acid of formula (I) with an oxirane of formula (II): 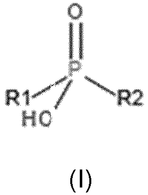 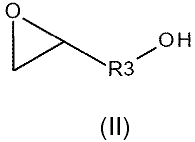 wherein
- R1 and R2: are the same or different and independently represent H or a hydrocarbyl radical, with the exception that R1 and R2 may not each be H at the same time and with the hydrocarbyl radical selected from C₁-C₁₀ alkyl, and wherein
- R3: is an alkylenyl group which is optionally substituted with a heteroatom selected from O, N and S,

wherein the phosphinate has a general structure of formula (III-A), (III-B), (IV-A),
(IV-B), (V-A), (V-B), (VI-A), (VI-B), (VI-C), or (VI-D):

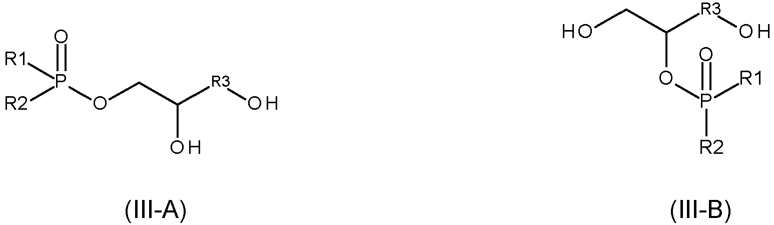

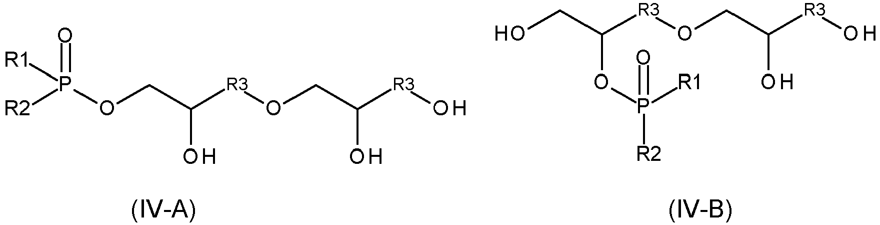

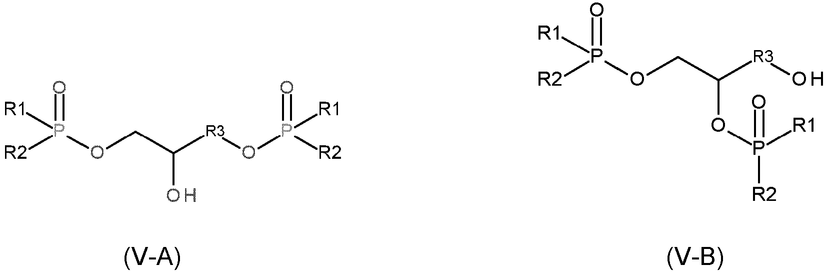

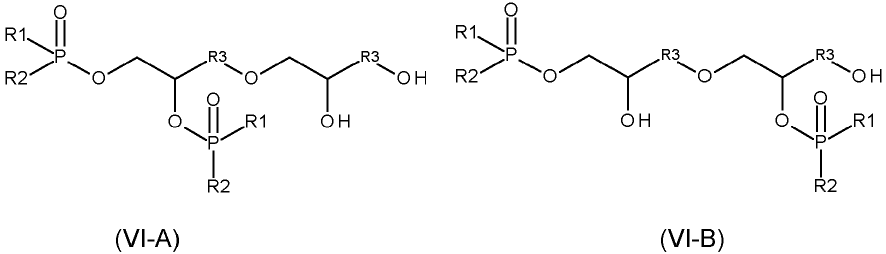

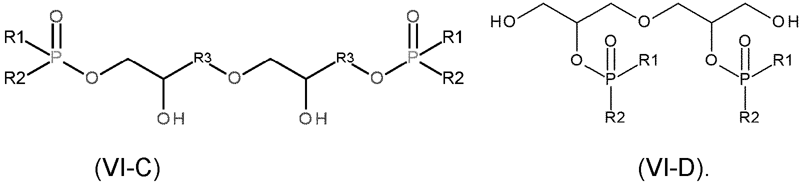

Unless otherwise indicated, the term "hydrocarbyl radical" as used herein indicates an aliphatic radical, aromatic radical, or a cycloaliphatic radical, which may be saturated or unsaturated, straight-chain or branched-chain, and optionally substituted with heteroatoms (e.g. O, N, S).

In particular, the "hydrocarbyl radical" encompasses: substituted or unsubstituted C₁ to C₁₈ alkyl groups, substituted or unsubstituted C₂-C₁₈-alkenyl groups, substituted or unsubstituted C₂-C₁₈-alkynyl groups, substituted or unsubstituted C₁-C₁₈-alkoxy groups, substituted or unsubstituted C₂-C₁₈-alkenoxy groups, substituted or unsubstituted C₂-C₁₈-alkynoxy groups, substituted or unsubstituted C₆ to C₁₈ aryl groups, substituted or unsubstituted C₇ to C₁₈ arylalkyl groups, substituted or unsubstituted C₃ to C₁₈ heteroaryl groups, substituted or unsubstituted C₃ to C₁₈ heteroarylalkyl groups, substituted or unsubstituted C₃ to C₁₈ cycloalkyl groups, and substituted or unsubstituted C₃ to C₁₈ heterocycloalkyl groups. Preferably, the hydrocarbyl radical in the present invention may be selected from C₁-C₁₀ alkyl and C₆-C₈ aryl groups.

Preferably, R1 and R2 are independently selected from H and C₁-C₆-alkyl groups. In one preferred embodiment, R1 and R2 are each independently selected from C₁-C₃-alkyl, and most preferably, both being ethyl. In another preferred embodiment, one of R1 and R2 is H and the other is selected from C₁-C₃-alkyl (e.g. ethyl).

Unless otherwise indicated, the term "alkylenyl" refers to a divalent analog of a linear or branched alkyl group, which may be optionally substituted with heteroatoms (e.g. O, N, S).

Preferably, R3 is is selected from C₁-C₃ alkylenyl, namely methylenyl (-CH₂-), ethylenyl (-CH₂CH₂-) or propylenyl butylenyl (-CH₂CH₂CH₂-) radicals. Still preferably, R3 is methylenyl (-CH₂-).

In one preferred embodiment, the phosphinate of the present invention is characterized by a phosphorous content of higher than 12 % by weight based on the total weight of the phosphinate.

In one preferred embodiment, the phosphinate of the present invention is characterized by a phosphorous content from 12.5 to 20 % by weight based on the total weight of the phosphinate.

The high phosphorous content of the invented phosphinate is advantageous in the intended flame retardant use, since the phosphorus moieties in phosphorus containing flame retardants are seen as the dominating contributor for flame retardancy. Thus, the phosphorous content (%w/w) of a phosphinate flame retardant has a significant positive correlation with its effectiveness in flame retardancy.

In one embodiment of the present invention, the invented phosphinate is characterized by a OH value of 10 to 850 mg KOH/g, preferably 100 to 800 mg KOH/g, and more preferably, 200 to 750 mg KOH/g.

The phosphinate of the present invention can be used as flame retardant and can function as reactive flame retardant for polymers and polymer foams, namely reacting with the monomers in the polymerization or foaming process.

Alternatively, the invented phosphinate can also function as additive flame retardant, which is mixed with polymer material in use.

In one embodiment of the present invention, the invented phosphinate has a general structure of formula (III-A'), (III-B'), (IV-A'), (IV-B'), (V-A'), (V-B'), (VI-A'), (VI-B'), (VI-C'), or (VI-D'):

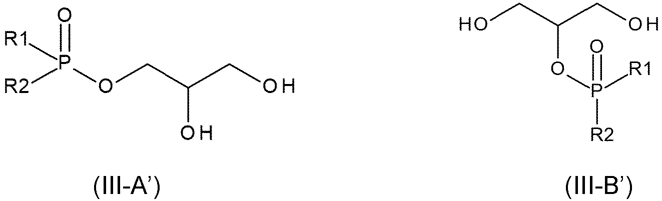

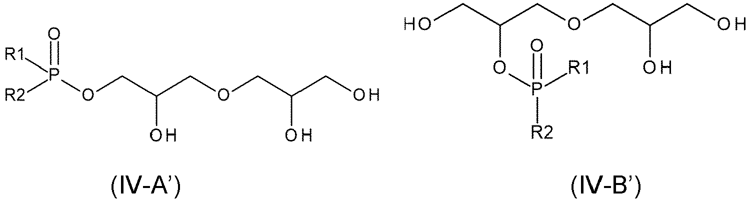

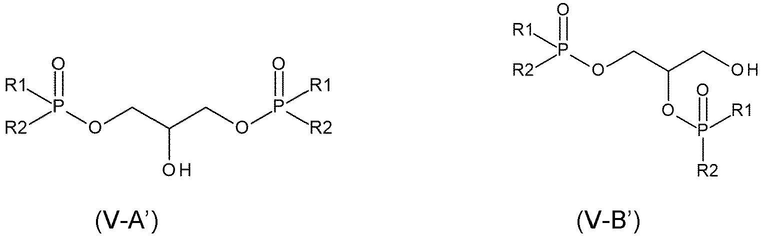

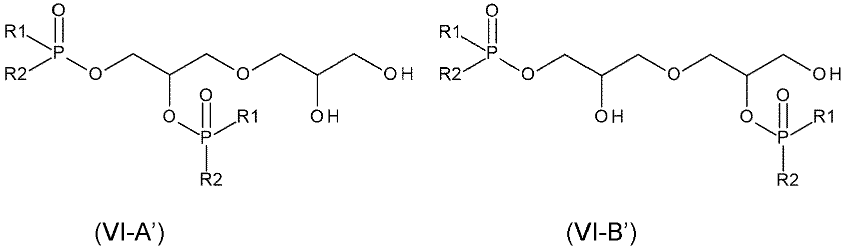

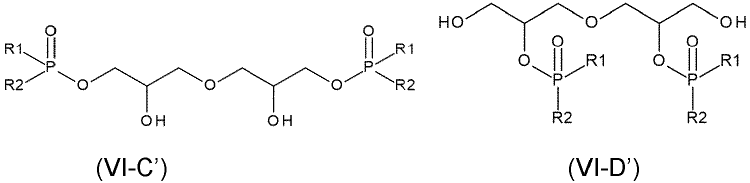

In one embodiment of the present invention, the invented phosphinate has a general structure of formula (III-A') or (III-B').

The regioselectivity and stereoselectivity of the desired epoxide ring opening reaction between an oxirane compound of formula (II) and at least one phosphinic acid compound represented by formula (I) may be directed by variations in steric hindrance and electronic environment surrounding the oxirane ring, often leading to the formation of a mixture of phosphinates as the resultant reaction product.

Thus, the present invention also relates to a composition of phosphinates obtainable or obtained by reacting at least a phosphinic acid of formula (I) with an oxirane of formula (II) as described above, said composition comprising at least one phosphinate with a general structure of formula (III-A), (III-B), (IV-A), (IV-B), (V-A), (V-B), (VI-A), (VI-B), (VI-C), or (VI-D).

In one embodiment of the present invention, said composition of phosphinates comprising at least one phosphinate with a general structure of formula (III-A'), (III-B'), (IV-A'), (IV-B'), (V-A'), (V-B'), (VI-A'), (VI-B'), (VI-C'), or (VI-D').

The composition of phosphinates according to the present invention can also be used as reactive or additive flame retardant as a whole and, in particular, may function as reactive flame retardant for polymers and polymer foams, by providing individual phosphinate which can be reacted with the monomers in the polymerization or foaming process.

The reaction of at least a phosphinic acid of formula (I) with an oxirane of formula (II) as aforementioned for the preparation of the phosphinate or composition of phosphinates according to the present invention may be carried out in the presence of a catalyst. A preferred type of said catalyst to prepare the invented phosphinate is phosphonium salt, e.g. ethyltriphenylphosphonium iodide.

The reaction of at least a phosphinic acid of formula (I) with an oxirane of formula (II) as aforementioned for the preparation of the phosphinate or composition of phosphinates according to the present invention may be carried out at a temperature from 0°C up to the boiling point of the reaction mixture, preferably from 20°C to 120°C, particularly preferably from room temperature to 120°C.

According to the present invention, the molar ratio of the phosphinic acid of formula (I) and the oxirane of formula (II) in the reaction to obtain the phosphinate or composition of phosphinates is preferably from 2:1 to 1:2, more preferably from 1:1.05 to 1: 1.8.

It can be advantageous to use an excess of the oxirane of formula (II) over the phosphinic acid of formula (I) in the reaction to produce the phosphinate of the present invention with a reduced acidity.

The present invention also provides a flame-retardant polymer obtained by reacting monomers and at least one phosphinate or a composition of phosphinates according to the present invention, under polymerization conditions.

Said flame-retardant polymer may be duroplastics selected from the group consisting of polyurethanes, epoxy resins, phenol-formaldehyde resins, melamine-formaldehyde resins, urea-formaldehyde resins and unsaturated polyesters.

Preferably, the flame-retardant polymer is a flame-retardant polyurethane (PUR), obtained by reacting a polyol, an isocyanate and at least one phosphinate or a composition of phosphonates according to the present invention, optionally in the presence of a polymerization catalyst.

Suitable polymerization catalysts for the production of the flame-retardant polyurethane may be selected from aliphatic tertiary amines (for example, triethylamine, tetramethylbutanediamine), cycloaliphatic tertiary amines (for example, 1,4-diaza(2,2,2)bicyclooctane), aliphatic aminoethers (for example, dimethylaminoethyl ether and N,N,N-trimethyl-N-hydroxyethyl-bisaminoethyl ether), cycloaliphatic aminoethers (e.g. N-ethylmorpholine), aliphatic amidines, cycloaliphatic amidines, urea, derivatives of urea (such as aminoalkyl ureas, see for example EP-A 0 176 013, in particular (3-dimethylaminopropylamine) urea), and tin catalysts (such as dibutyltin oxide, dibutyltin dilaurate, tin octoate).

Advantegously, the invented phosphinates or phosphinate compositions are highly compatible with the polyols for the production of the flame-retardant polyurethane. Notably, the invented phosphinates or phosphinate compositions could dissolve in polyols to form a homogenous solution, which may be stably stored up to months on the shelf or in transportation. Said homogenous solution as starting material for polymerization is also beneficial for providing the end PUR product with a uniformly distributed flame retardancy.

For the purpose of the present invention, the term "polyol" refers to compounds having at least two hydrogen atoms capable of reaction with isocyanates. These are compounds having amino groups, thio groups or carboxyl groups, and preferably compounds having hydroxyl groups, in particular from 2 to 8 hydroxyl groups.

Suitable polyols for the purpose of the present invention include those having a molecular weight of from 400 to 10,000, specifically those of molecular weight from 1000 to 6000, preferably from 2000 to 6000, and are generally polyethers or polyesters dihydric to octahydric, preferably dihydric to hexahydric, or else polycarbonates or polyesteramides, as known per se for the production of homogenous or of cellular polyurethanes, and as described in DE-A 28 32 253, for example.

Preferred polyester polyols are obtained by polycondensation of a polyalcohol such as ethylene glycol, diethylene glycol, propylene glycol, 1,4-butanediol, 1,5-pentanediol, methylpentanediol, 1,6-hexanediol, trimethylolpropane, glycerol, pentaerythritol, diglycerol, glucose and/or sorbitol, with a dibasic acid such as oxalic acid, malonic acid, succinic acid, tartaric acid, adipic acid, sebacic acid, maleic acid, fumaric acid, phthalic acid and/or terephthalic acid. These polyester polyols can be used alone or in combination.

For production of thermoset flame-retardant polyurethane, a further preferred group of polyester polyols are those with two, three or four hydroxyl groups, including ethylene glycol, propylene glycol, trimethylolpropane and pentaerythritol.

Preferred polyether polyols include, but are unlimited to, triols such as glycerol, trimethylolethane (i.e., 1,1,1-tris(hydroxymethyl)ethane), and trimethylolpropane (i.e., 1,1,1-tris(hydroxymethyl)propane); tetraols such as pentaerythritol; pentaols such as glucose; hexaols such as dipentaerythritol and sorbitol; or alkoxylated derivatives of all the above polyalcohols, such as preferably, ethoxylated and propoxylated derivatives thereof.

A particularly preferred polyether polyol is a polyoxypropylene triol.

Other suitable polyols for the purpose of the present invention include those having a low molecular weight from 30 to 400, which are preferably compounds having hydroxyl groups and/or amino groups and serving as chain extenders or crosslinkers. These compounds generally have from 2 to 8, preferably from 2 to 4, hydrogen atoms capable of reaction with isocyanates.

Suitable isocyanate used for producing the flame-retardant polyurethane of the present invention may be selected from, e.g., aliphatic, cycloaliphatic, araliphatic, aromatic or heterocyclic polyisocyanates (see, for example, W. Siefken in Justus Liebigs Annalen der Chemie, 562, pp. 75-136), for example those of the formula Q(NCO)ᵣ, where r is from 2 to 4, preferably from 2 to 3, and Q is an aliphatic hydrocarbyl radical having from 2 to 18 carbon atoms, preferably from 6 to 10 carbon atoms, a cycloaliphatic hydrocarbyl radical having from 4 to 15 carbon atoms, preferably from 5 to 10 carbon atoms, an aromatic hydrocarbyl radical having from 6 to 15 carbon atoms, preferably from 6 to 13 carbon atoms, or an araliphatic hydrocarbyl radical having from 8 to 15 carbon atoms, preferably from 8 to 13 carbon atoms.

Suitable polyisocyanates for the purpose of the invention are aromatic, alicyclic and/or aliphatic polyisocyanates having at least two isocyanate groups and mixtures thereof. Preference is given to aromatic polyisocyanates such as tolyl diisocyanate, methylene diphenyl diisocyanate, naphthylene diisocyanate, xylylene diisocyanate, tris(4-isocyanatophenyl)methane and polymethylene-polyphenylene diisocyanates; alicyclic polyisocyanates such as methylenediphenyl diisocyanate, tolyl diisocyanate; aliphatic polyisocyanates and hexamethylene diisocyanate, isophorone diisocyanate, dimeryl diisocyanate, 1,1-methylenebis(4-isocyanatocyclohexane-4,4'-diisocyanatodicyclohexylmet hane isomer mixture, 1,4-cyclohexyl diisocyanate, and lysine diisocyanate and mixtures thereof.

Particular preference is generally given to the polyisocyanates readily available in industry, such as 2,4- and 2,6-toluene diisocyanate.

For the purpose of the present invention, the flame-retardant polyurethanes may be linear PUR, e.g., produced by diols and diisocyanates, or crosslinked PURs, e.g. produced by converting triisocyanate diisocyanate mixtures with triol-diol mixtures. The properties of flame-retardant polyurethanes can be varied in a wide range. Depending on the degree of crosslinking and/or isocyanate or OH component used, thermosets, thermoplastics or elastomers are obtained.

The flame-retardant polyurethanes of the present invention may be used as soft or hard foam, or alternatively as molding compounds for molding, as casting resins (isocyanat resins), as (textile) elastic fibers, polyurethane coatings and as polyurethane adhesives.

The present invention also provides a flame-retardant polyurethane foam obtained by reacting a polyol, an isocyanate, and a phosphinate or a composition of phosphinates as described above, under stirring to effect foaming, optionally in the presence of a blowing agent, a foaming catalyst, a foam stabilizer, and/or other additives.

For the purpose of the present invention, the term "blowing agent" refers to a substance which is capable to provide gas and produce a foam of cellular structure in the polyol-isocynate reaction. Any conventional blowing agents for the production of polyurethane foams are suitable for use here, including physical blowing agents and chemical blowing agents. Examples of physical blowing agents include butane and carbon dioxide, which expand at a reduced pressure, as well as short-chain (C₅-C₆) aliphatic molecules such as pentane or cyclopentane and various hydrofluoroolefins such as 1,3,3,3-tetrafluoropropen, which are low-boiling-point liquids. Examples of chemical blowing agents include water and carboxylic acids, which release gas when reacting with isocyanate. A particular preferred blowing agent is water.

For the purpose of the present invention, suitable foaming catalyst for the producting of the invented flame-retardant polyurethane foam are preferably selected from amine catalysts (e.g. tertiary amines) and orginanometalics (e.g. stannous octoate, stannous acetate, dibutyltin diacetate, etc.).

For the purpose of the present invention, suitable foam stablizers for producing flame-retardant polyurethane foams may be any conventional stabilizers for controlling and stabilizing polyurethane foams. As one preferred example, said stablizer may be selected from silicone surfactants.

For the production of a flame-retardant polyurethane foam according to the present invention, other additives may be added to the reactant mixtures, including fillers, pigments, light stablizers, and processing aids.

The invention furthermore relates to the use of the flame-retardant polyurethane or flame-retardant polyurethane foam as aforementioned for the manufacture of doorliners, headliners, seat covers, high-resilience foam seating, high-resilience foam mattresses rigid foam insulation panels, microcellular foam seals and gaskets, durable elastomeric wheels and tires, automotive suspension bushings, electrical potting compounds, high-performance adhesives, surface coatings and sealants, synthetic fibers, carpet underlay, hard-plastic parts and hoses.

The invention also relates to the use of the flame-retardant polyurethane or flame-retardant polyurethane foam for the manufacture of electrical switch components, components in automobile construction, electrical engineering or electronics, printed circuit boards, prepregs, potting compounds for electronic components, in boat and rotor blade construction, in outdoor GFRP applications, domestic and sanitary applications and engineering materials.

Additionally, the invented phosphinate(s) obtainable or obtained by reacting at least a phosphinic acid of formula (I) with an oxirane of formula (II) may be used as is with a polymer as an additive flame retardant. As such, the present invention also provides a flame-retardant polymer composition, comprising at least one invented phosphinate and a polymer.

The polymer in the aforementioned flame-retardant polymer composition may be a thermoplastic polymer, wherein said thermoplastic polymer is preferably selected from the group consisting of polyamides, polycarbonates, polyesters, polyvinyl esters, polyvinyl alcohols, polyolefins, styrenics, polyurethanes and polyureas.

Alternatively, the polymer in the aforementioned flame-retardant polymer composition may be a duroplastic polymer, wherein said duroplastic polymer is preferably selected from the group consisting of polyurethanes, epoxy resins, phenol-formaldehyde resins, melamine-formaldehyde resins, urea-formaldehyde resins and unsaturated polyesters. One preferred example of said duroplastic polymer is a polyurethane foam.

Said flame-retardant polymer composition may further comprise an optional additive. Typical amounts of said optional additive are between 0 and 60% by weight, preferably between 1 and 50 % by weight and more preferred between 5 and 30 % by weight, referring to the total amount of the flame-retardant polymer composition.

Examples of said optional additive include antioxidants, blowing agents, further flame retardants, light stabilizers, heat stabilizers, impact modifiers, processing aids, glidants, processing aids, nucleating agents and clarifiers, antistatic agents, lubricants, such as calcium stearate and zinc stearate, viscosity and impact modifiers, compatibilizers and dispersing agents, dyes or pigments, antidripping agents, additives for laser marking, hydrolysis stabilizers, chain extenders, softeners, plasticizers, fillers and reinforcing agents.

One preferred optional additive for said flame-retardant polymer composition is filler. Fillers may be selected from the group consisting of: metal hydroxides and metal oxides, e.g. magnesium hydroxide, aluminum hydroxide, silicates, preferably phyllosilicates, such as bentonite, kaolinite, muscovite, pyrophyllite, marcasite and talc or other minerals, such as wollastonite, silica such as quartz, mica, feldspar and titanium dioxide, alkaline earth metal silicates and alkali metal silicates, carbonates, preferably calcium carbonate and talc, clay, mica, silica, calcium sulfate, barium sulfate, pyrite, glass beads, glass particles, wood flour, cellulose powder, carbon black, graphite and chalk.

Another preferred optional additive for said flame-retardant polymer composition is a reinforcing agent, such as reinforcing fibers. These reinforcing fibers are preferably selected from the group consisting of glass fibers, carbon fibers, aramid fibers, potassium titanate whiskers, with glass fibers being preferred. The mechanical stability of the flame-retardant polymer compositions can be increased by reinforcing fibers, particularly by glass fibers.

The invented phosphinate flame retardant and the at least one optional additive as aforementioned can be incorporated into the polymer component of the flame-retardant polymer compositions, by premixing all components as powder and/or granules in a mixer and then homogenizing them in the polymer melt in a compounding unit (e.g. a twin-screw extruder). The melt is usually withdrawn as a strand, cooled and granulated. The invented phosphinate flame retardant and the at least one optional additive can also be introduced separately via a metering system directly into the compounding unit. It is also possible to admix the invented phosphinate flame retardant and the at least one optional additive as aforementioned to a finished polymer granulate or powder and to process the mixture directly to form parts, e.g. on an injection molding machine.

The flame-retardant polymer compositions according to the invention are suitable for the production of moldings, e.g. films, sheets, threads and fibers, for example by injection molding, extrusion, blow molding or press molding.

### Examples

Hereinafter, the present invention is described in more detail and specifically with reference to the Examples, which however are not intended to limit the present invention.

### Methods

High-performance liquid chromatography coupled with a mass spectrometry (HPLC-MS) was used to determine the molecular composition of the synthesized products in the Synthetic Examples.

Structural elucidation on identifying regio-isomers was performed via ¹H- and ³¹P-NMR. Separation method for individual phosphinate compounds in the product is preparative column chromatography.

Raw materials

| | | |
|---|---|---|
| Diethylphosphinic acid (DEPS) | CAS: 813-76-3 | Mw=122.1g/mol |
| Ethylphosphinic acid (EPOS) | CAS: 4363-06-8 | Mw= 94.1 g/mol |
| (±)-Glycidol, 96 wt.% | CAS: 556-52-5 | Mw= 74.1 g/mol |

Synthetic Examples

### Generic Synthetic Procedure: {phosphinic acid + glycidol}

100 g of a phosphinic acid is placed in a 500 mL five-necked flask with a dropping funnel under an argon atmosphere. The phosphinic acid is heated to [90 - 150]°C while stirring and [60 - 1000] g glycidol is added via dropping funnel over the course of eight hours. The mixture is then stirred at [100 - 180]°C for a further [1 - 10] h. While the Synthetic Examples 1-3 below used DEPS and EPOS as the only two phosphonic acid to react with glycidol, the Applicant has noted that other phosphonic acid and other oxiranes are also applicable in this procedure under similar reaction conditions.

Main products of the Synthetic Examples 1 & 2 and their structures:
(1) DEPS-Glycidol I: isomeric mixture as identified below: 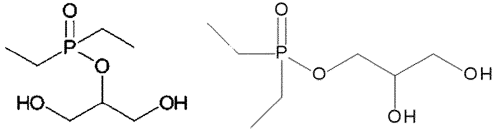
(2) DEPS-Glycidol II: isomeric mixture with main isomers identified below: 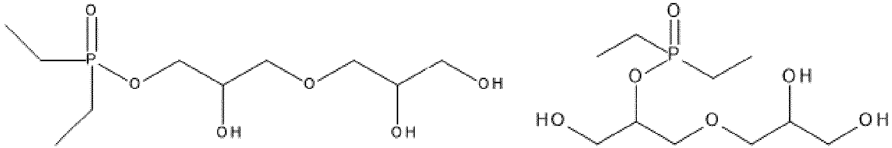
(3) DEPS-Glycidol III: isomeric mixture with main isomers identified below: 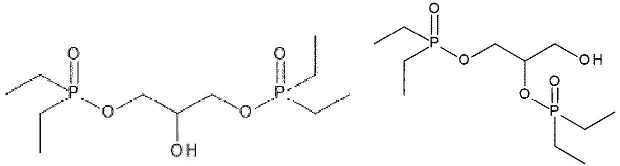
(4) DEPS-Glycidol IV: isomeric mixture with main isomers as identified below:

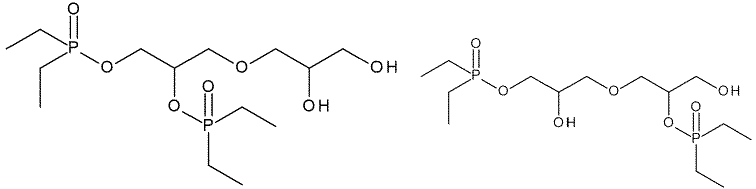

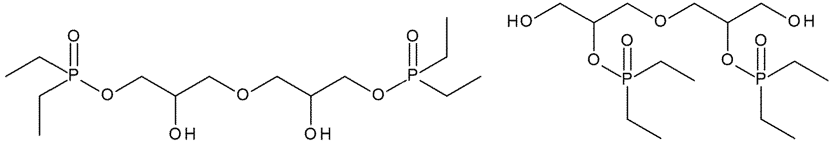

Main products of the Synthetic Examples 3 and their structures:
(1) EPOS-Glycidol I: isomeric mixture as identified below: 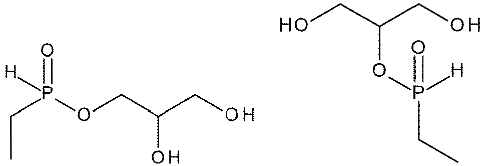
(2) EPOS-Glycidol II: isomeric mixture with main isomers identified below: 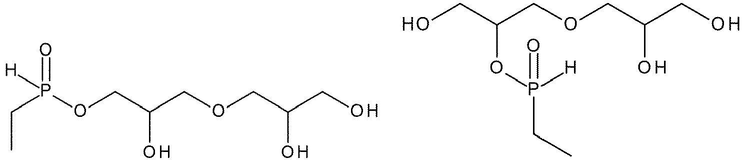
(3) EPOS-Glycidol III: isomeric mixture with main isomers identified below: 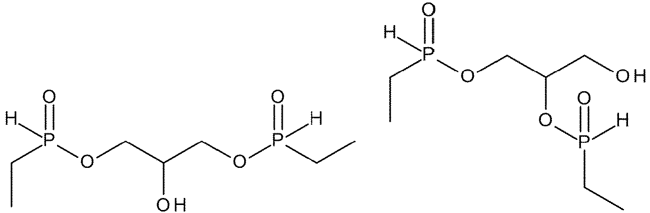
(4) EPOS-Glycidol IV: isomeric mixture with main isomers as identified below:

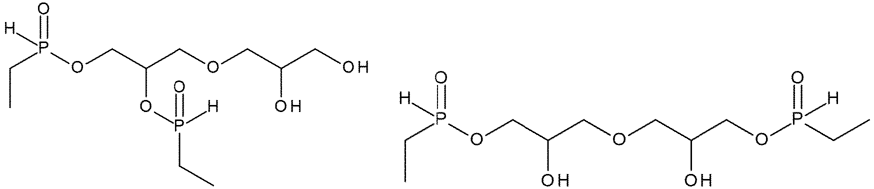

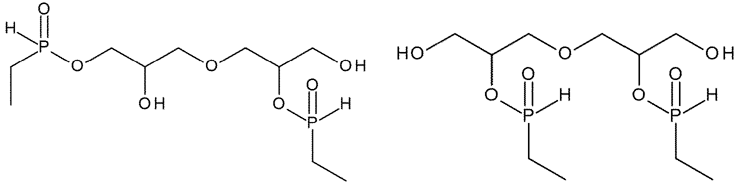

### Synthetic Example 1: FR1 {DEPS-glycidol}

122.1 g of diethylphosphinic acid was placed in a 500 mL five-necked flask with a dropping funnel under an argon atmosphere. The diethylphosphinic acid was heated to 120°C while stirring and 115.7 g glycidol was added via dropping funnel over the course of eight hours. The mixture was then stirred at 150°C for a further six hours. The light brown viscous product was analyzed by means of HPLC-MS, which revealed the following product composition of our FR1:

| | |
|---|---|
| DEPS-Glycidol I: | 28% |
| DEPS-Glycidol II: | 18% |
| DEPS-Glycidol III: | 36% |
| DEPS-Glycidol IV: | 16% |
| Diglycerol: | 2% |

The product had an acid value of < 1 mg KOH/g, an OH value of 614 mg KOH/g, and a phosphorous content of 13.3 wt %.
³¹P-NMR (DMSO-d6) analysis of the product showed multiple signals in the range of 62.4-61.4 ppm > 98 mol%.

### Synthetic Example 2: {DEPS-glycidol}

122.1 g of diethylphosphinic acid was placed in a 500 mL five-necked flask with a dropping funnel under an argon atmosphere. The diethylphosphinic acid was heated to 65°C while stirring and 123.5 g glycidol was added via dropping funnel over the course of three hours. The mixture was then stirred at 120°C for a further 20 hours. The light brown viscous product was analyzed analytically by means of HPLC-MS, which revealed the following product composition:

| | |
|---|---|
| DEPS-Glycidol I: | 15% |
| DEPS-Glycidol II: | 34% |
| DEPS-Glycidol III: | 25% |
| DEPS-Glycidol IV: | 22% |
| Diglycerol: | 4% |

The product had an acid value of 2.4 mg KOH/g, an OH value of 631 mg KOH/g, and a phosphorous content of 12.9 wt%.
³¹P-NMR (DMSO-d6) analysis of the product showed multiple signals in the range of 62.4-61.4 ppm > 98 mol%.

### Synthetic Example 3: FR2 {EPOS-glycidol}

119.6 g of ethylphosphinic acid was placed in a 500 mL five-necked flask with a dropping funnel under an argon atmosphere. The ethylphosphinic acid was heated to 100°C while stirring and 161 g glycidol was added via dropping funnel over the course of 2 hours. The mixture was then stirred at 150°C for a further 8 hours. The colorless liquid-clear product was analyzed analytically by means of HPLC-MS, which revealed the following product composition:

| | |
|---|---|
| EPOS-Glycidol I: | 16% |
| EPOS-Glycidol II: | 30% |
| EPOS-Glycidol III: | 28% |
| EPOS-Glycidol IV: | 23% |
| Diglycerol: | 3% |

It was found that the EPOS-Glycidol product in this synthetic example has similar regioisomerism as the DEPS-Glycidol products of synthetic examples 1 and 2. The product had an acid value of < 1 mg KOH/g and an OH value of 700 mg KOH/g, and a phosphorus content of 14.1 wt%.
³¹P-NMR (DMSO-d6) analysis of the product showed multiple signals in the range of 46.0-42.0 ppm > 95 mol%.

### Application Examples

### 1. Components used:

### Flame Retardant:

| | |
|---|---|
| FR-1: | product of Synthetic Example 1 |
| FR-2: | product of Synthetic Example 3 |
| Ref-1: | Fyrol^{®} PCF from ICL Industrial Products, TCPP (tris (1-chloro-2-propyl) phosphate), a halogenated phosphate ester |
| Ref-2: | Exolit^{®} OP 550 from Clariant International Ltd, a non-halogenated, polymeric phosphorus polyol specifically designed for flexible polyurethane foams, which is a phosphate ester with hydroxyalkyl groups. |
| Ref-3: | Exolit^{®} OP 560 from Clariant International Ltd., a non-halogenated polymeric phosphorous polyol specifically designed for flexible polyurethane foams, which is a phosphonate ester with hydroxyalkyl groups. |

### Polyol:

Polyether polyol (P1): Arcol^{®} 1104 or 1108 from Covestro AG, a medium molecular weight polyoxypropylene triol with an OH number of 56 mg KOH/g
Polyester polyol (P2): Desmophen^{®} 60WB01 from Covestro AG, a partly branched polyester polyol based on adipic acid, diethylene glycol and trimethylol propane, with an OH number of 60 mg KOH/g

### Polymerization Catalyst:

| | |
|---|---|
| Cat 1: | Kosmos^{®} EF from Evonik Industries, a stannous catalyst |
| Cat 2: | Kosmos^{®} 29 from Evonik Industries, a stannous octoate catalyst |
| Cat 3: | Niax^{®} A1 from Momentive Performance Materials Inc., an amine catalyst based on bis(2-dimethylaminoethyl)ether |
| Cat 4: | Tegoamin^{®} 33 from Evonik Industries, an amine catalyst based on triethylenediamine |
| Cat 5: | JEFFCAT^{®} ZF-10 from Huntsman, an amine catalyst based on N,N,N'-trimethyl-N'-hydroxyethylbisam inoethylether |
| Cat 6: | Tegoamin^{®} E10 from Evonik Industries, an amine catalyst based on 1,4-dimethylpiperazine |
| Cat 7: | Niax^{®} A30 from Momentive Performance Materials Inc., an amine catalyst based on bis(2-dimethylaminoethyl) ether |

### Foam Stabilizer:

| | |
|---|---|
| S1: | Tegostab^{®} B 8232 from Evonik Industries, a silicone surfactant |
| S2: | Tegostab^{®} B 8244 from Evonik Industries, a silicone surfactant |
| S3: | Tegostab^{®} B 8235 from Evonik Industries, a silicone surfactant |

### TDI (tolyl diisocyanate):

| | |
|---|---|
| T80: | Desmodur^{®} T80 from Covestro AG, 2,4- and 2,6-toluene diisocyanate, 80/20 mixture of isomers |
| T65: | Desmodur^{®} T65 from Covestro AG, 2,4- and 2,6-toluene diisocyanate, 65/35 mixture of isomers |

### 2. Hydrolytic Stability Test

Hydrolytic stability of different flame retardants was determined by measuring the acid value of blends made of polyol, flame retardant and water over time and during storage at an elevated temperature. For this purpose, 90 g of polyol, 9 g of flame retardant (10 wt.-%) and 4.5 g of water (5 wt.-%) were homogenized by stirring at 1500 rpm for 2 minutes. The acid value was then determined using a 3:1 (v/v) isopropanol / water mixture as solvent and 0.1 N NaOH (aq.) solution as titration agent. The samples were then stored at 40°C and the acid values determined after 11, 17 and 28 days. Samples were homogenized before analysis by stirring at 1500 rpm for 2 minutes. The acid value development of polyol-water blends without flame retardant addition was also determined after 11 and 28 days, respectively, as shown in the table below.

**Table 1: Hydrolytic stability test: Evolution of the acid value of mixtures of polyols with 10 %(m/m) of flame retardant and 5 %(m/m) of water during storage at 40°C.**

| | Polyol | Flame retardant | Acid value (mg KOH/g) | | |
|---|---|---|---|---|---|
| | | | 11 d | 17 d | 28 d |
| Polyether blend | P1 | - | 0 | - | 0.1 |
| | P1 | FR-1 | 0.1 | 0.1 | 0.1 |
| | P1 | Ref-2 | 42.8 | 45.7 | 47.2 |
| | P1 | Ref-3 | 16.4 | 16.5 | 16.6 |
| Polyester blend | P2 | - | 1.3 | - | 1.9 |
| | P2 | FR-1 | 1.3 | 1.4 | 1.9 |
| | P2 | Ref-2 | 89.8 | 93.0 | 94.7 |
| | P2 | Ref-3 | 71.9 | 81.1 | 84.1 |

Regardless of the polyol type and compared to the flame-retardant-free reference, the inventive example FR-1 did not cause a notable increase of acid value in their polyol blends, during and after the entire 28 days of storage under 40°C. This indicates a high hydrolytic stability of FR-1 during storage in the polyol blend, namely zero to negligible hydrolysis of the FR-1. In comparison, for both polyol types, the acid value of polyol blends containing a phosphate Ref-2 or a phosphonate Ref-3 significantly increased after merely 11 days under the same storage condition, which can only be explained by hydrolysis of Ref-2 or Ref-3, respectively.

### 3. Flexible polyurethane (PUR) foam formulations with performance testing

Stannous catalysts, polyol, flame retardant, water, foam stabilizer and amine catalysts were weighed into a dry beaker in that order and premixed for 60 seconds at 500 rpm (for polyether polyol formulations) or 1000 rpm (for polyester polyol formulations), respectively. After addition of **TDI,** the mixtures were stirred at 2500 rpm for 7 seconds. The resulting mass was rapidly poured into a paper-lined box mold (25*26*26 cm). Rise time and further observations were noted during the foaming process. The foams were cured at room temperature for approximately 16 hours before cutting and collected in each comparative (C1-C7) or inventive (I1-I3) example for further evaluation.

The selection of polymerization catalyst, foam stabilizer and **TDI** in each foam example was made based on existing empirical guidance for optimal foamability in each case, with details listed below in Table 2.

**Table 2: Polyol, Flame Retardant, Catalyst, Foam Stabilizer and TDI used in each foam example**

| Component | Example | | | | | | | | | |
|---|---|---|---|---|---|---|---|---|---|---|
| | C1 | C2 | C3 | C4 | C5 | C6 | C7 | I1 | I2 | I3 |
| Polyol | P1 | P1 | P1 | P1 | P2 | P2 | P2 | P1 | P1 | P2 |
| Flame Retardant | 0 | Ref-1 | Ref-1 | Ref-2 | 0 | Ref-1 | Ref-2 | FR-1 | FR-2 | FR-1 |
| Polymerization Catalyst (weight ratio) | Cat 2 | Cat 2 | Cat 2 | Cat 2 | Cat 6 | Cat 6 | Cat 1 | Cat 1 | Cat 1 | Cat 1 |
| | Cat 3 | Cat 3 | Cat 3 | Cat 3 | Cat 7 (3:2) | Cat 7 (1:1) | Cat 6 (4:9) | | Cat 5 (3:2) | Cat 6 |
| | Cat 4 (3:2:4) | Cat 4 (2:1:2) | Cat 4 (1.3:1:2) | Cat 4 (3:2:4) | | | | | | Cat 7 (2:5:8) |
| Foam Stabilizer | S1 | S1 | S1 | S1 | S3 | S3 | S3 | S2 | S1 | S3 |
| TDI (weight ratio) | T80 | T80 | T80 | T80 | T80 | T80 | T80 | T80 | T80 | T65 |
| | | | | | | | T65 (41.4:10.4) | | | |

Each of the PUR foam example was then evaluated for flame retardancy and emission performance, as explained below.

### Evaluation of flame retardancy

The efficiency of the flame retardants was evaluated by testing the burning behavior of flexible polyurethane foam samples with a target density of 30 kg/m³, containing the flame retardants in the horizontal burn test, as described in the Federal Motor Vehicle Safety Standard 302 (FMVSS 302). According to this standard, samples are given the highest classification (SE, "self-extinguishing") if the flame does not travel beyond a 38 mm mark on the specimen but extinguishes within this distance. Lower classifications include SE/NBR (self-extinguishing/no burn rate), SE/B (self-extinguishing/burn rate) and B (burn rate). Five sample specimens were cut from each foam and submitted to the test. The lowest-rated specimen determined the overall classification for the foam.

### Evaluation of emission performance

Low emissions from materials are particularly important in interior automotive applications. They can be classified into two types: semi-volatile condensable emissions (FOG) and volatile organic compounds (VOC). The name FOG emissions stems from the fogging effect they can have on cold surfaces such as car windshields. They can be quantified according to DIN 75201 B: A sample is heated to 100°C for 16 h in a specialized device, while semi-volatile components of the emissions are condensed on a cooled surface and quantified gravimetrically. VOC emissions can be quantified by thermodesorption analysis according to the automotive standard VDA 278. A sample in a thermodesorption tube is heated to 90°C for 30 min, and condensates are collected in a cooling trap before being identified and quantified via GC/MS against an external standard like toluene. The emission performance of the new flame retardant described herein was evaluated by determining both FOG and VOC emissions according to these procedures.

The flame retardancy and emission performance of tested foam examples are compared below, separately listed by the polyol type in the foam.

**Table 3: Performance data of flexible polyurethane polyether (P1) foam formulations**

| Component* | Example | | | | | |
|---|---|---|---|---|---|---|
| | C1 | C2 | C3 | C4 | I1 | I2 |
| P1 | 100 | 100 | 100 | 100 | 100 | 100 |
| Ref-1 | 0 | 12 | 8 | 0 | 0 | 0 |
| Ref-2 | 0 | 0 | 0 | 4 | 0 | 0 |
| FR-1 | 0 | 0 | 0 | 0 | 4 | 0 |
| FR-2 | 0 | 0 | 0 | 0 | 0 | 4 |
| Catalyst | 0.45 | 0.50 | 0.43 | 0.45 | 0.17 | 0.5 |
| Water | 3.5 | 4.0 | 3.2 | 3.5 | 3.3 | 3.3 |
| Foam Stabilizer | 1.3 | 1.3 | 1.3 | 1.3 | 1.3 | 0.7 |
| TDI | 43.7 | 48.4 | 40.3 | 44.5 | 46.45 | 46.87 |
| Density [kg/m³] | 32.1 | 29.8 | 32.5 | 29.8 | 28.9 | 29.6 |
| FMVSS 302 rating | B | SE | SE/NBR | SE | SE | SE |
| Fogging [mg/g] | n.d.^{†} | 26.2 | n.d. | 2.0 | 0.3 | 0.3 |
| VDA 278 [ppm] | n.d. | 5787 | n.d. | 547 | 52 | 103 |

| | | | | | | |
|---|---|---|---|---|---|---|
| **Amounts of all components are given in parts per 100 parts of polyol (php).* *^{†}not determined* | | | | | | |

As shown in the performance data listed in Table 3, comparative example C1 (polyether polyurethane foam without flame retardant additive) does not meet the required flame retardancy standard. With 12 php of halogenated reference flame retardant TCPP (Ref-1), the comparative example C2 provides a polyether polyurethane foam which meets required flame retardancy standards but shows very bad emission properties, as reflected in the associated fogging and VDA 278 parameters. In an attempt to reduce undesired emission in TCPP-incorporated PUR foam samples, comparative example C3 has reduced the TCPP content to 8 php but failed to achieve the required flame retardancy rating.

Comparative example C4 is a polyether polyurethane foam with 4 php of reactive non-halogenated reference flame retardant Exolit^{®} OP 550 (Ref-2), which meets required flame retardancy standards, gives lower semi-volatile condensable emissions (i.e. fogging) compared to C2 but still higher VOC (i.e. VDA 278) than desired.

The inventive example I1, a polyether polyurethane foam with 4 php of reactive non-halogenated inventive flame retardant (FR-1), not only meets required flame retardancy standards but also features least emission in both semi-volatile condensable emissions and VOC measurements.

The inventive example I2, a polyether polyurethane foam with 4 php of reactive non-halogenated inventive flame retardant (FR-2), is equally excellent as I1, in flame retardancy rating and emission properties.

**Table 4: Performance data of flexible polyurethane polyester (P2) foam formulations**

| Component | Example | | |
|---|---|---|---|
| | C5 | C6 | I3 |
| P2 | 100 | 100 | 100 |
| Ref-1 | 0 | 8 | 0 |
| FR-1 | 0 | 0 | 6.5 |
| Catalyst | 1.0 | 0.8 | 0.75 |
| Water | 4.0 | 4.0 | 4.1 |
| Stab | 1.2 | 1.2 | 1.2 |
| TDI | 55.4 | 49.9 | 52.7 |
| Density [kg/m³] | 30.0 | 32.0 | 29.5 |
| FMVSS 302 rating | B | SE | SE |
| Fogging [mg/g] | n.d. | 4.52 | 0.25 |
| VDA 278 [ppm] | n.d. | 3049 | 180 |

As shown in the performance data listed in Table 3, comparative example C5 (polyurethane polyester foam) without flame retardant does not meet the required flame retardancy standard.

With 8 php of halogenated reference flame retardant TCPP (Ref-1), the comparative example C6 provides a polyurethane polyester foam which meets required flame retardancy standards but shows very bad emission properties, as reflected in the associated fogging data and especially the VDA 278 measurement.

Advantageously, the inventive example I3, a polyurethane polyester foam with 6.5 php of reactive non-halogenated inventive flame retardant (FR-1), not only meets required flame retardancy standards but also gives the minimal quantity in both semi-volatile condensable emissions and VOC measurements.

Summarizing from these experimental data, the technical benefits of the inventive phosphinate flame retardants are not limited to the hydrolytic stability, compatibility with polyol system for polymer processing, but also extended to providing flame-retardant PUR foams with excellent flame retardancy and minimal emission upon use. It was further noted that, the inventive flame retardants FR-1 and FR-2 showed excellent compatibility with each polyol tested and stayed in solution in liquid form on the shelf over 28 days.

## Claims

1. A phosphinate obtainable or obtained by reacting at least a phosphinic acid of formula (I) with an oxirane of formula (II): 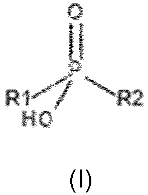 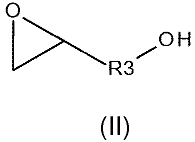 wherein
R1 and R2 are the same or different and independently represent H or a hydrocarbyl radical, with the exception that R1 and R2 may not each be H at the same time and with the hydrocarbyl radical selected from C₁-C₁₀ alkyl, and wherein
R3 is an alkylenyl group which is optionally substituted with a heteroatom selected from O, N and S,
wherein the phosphinate has a general structure of formula (III-A), (III-B), (IV-A), (IV-B), (V-A), (V-B), (VI-A), (VI-B), (VI-C), or (VI-D):

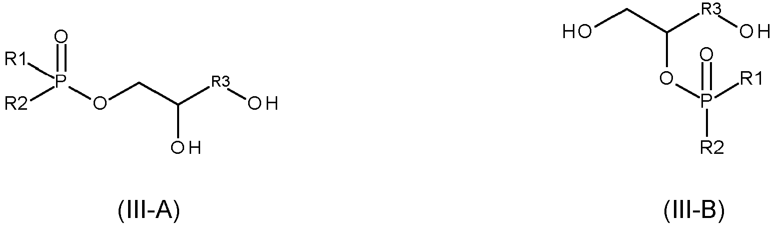

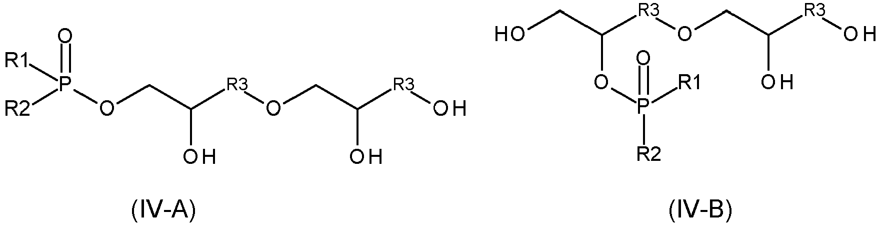

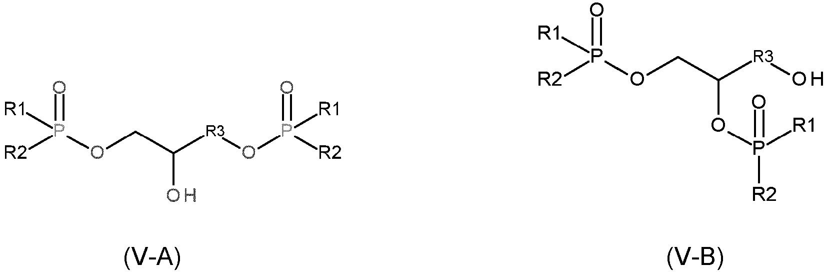

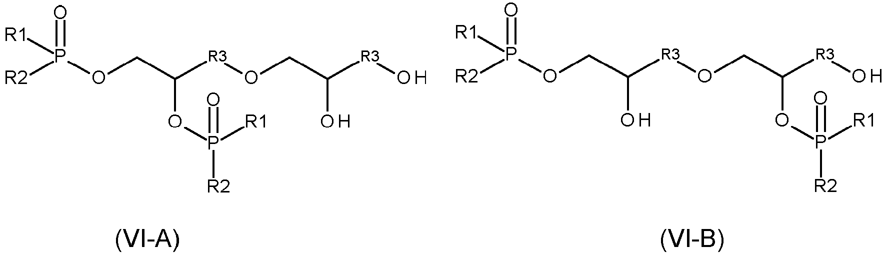

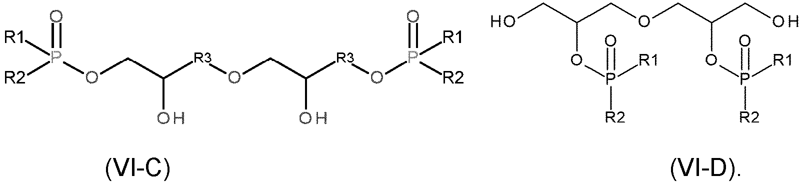

2. The phosphinate of claim 1, wherein R1 and R2 are selected from C₁-C₆ alkyl.

3. The phosphinate of claim 1, wherein one of R1 and R2 is H and the other is selected from C₁-C₃-alkyl.

4. The phosphinate of any of claims 1 - 3, wherein R3 is selected from C₁-C₃ alkylenyl.

5. The phosphinate of any of claims 1 - 3, wherein R3 is CH₂.

6. The phosphinate of any of claims 1 - 5, **characterized by** a phosphorous content of higher than 12 % by weight based on the total weight of the phosphinate.

7. The phosphinate of claim 1, wherein the phosphinate has a general structure of formula (III-A') or (III-B'):

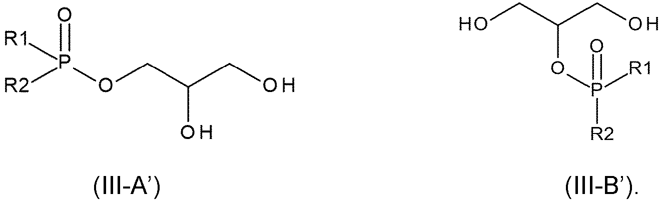

8. Use of a phosphinate of any one of claims 1 - 7 as a flame retardant.

9. A composition of phosphinates obtainable or obtained by reacting at least a phosphinic acid of formula (I) with an oxirane of formula (II): 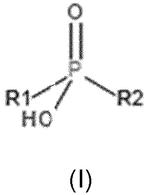 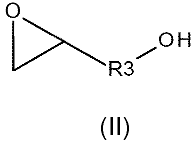 wherein
R1 and R2 are the same or different and independently represent H or a hydrocarbyl radical, with the exception that R1 and R2 may not each be H at the same time and with the hydrocarbyl radical selected from C₁-C₁₀ alkyl, and wherein
R3 is an alkylenyl group which is optionally substituted with a heteroatom selected from O, N and S,
the composition comprising at least one phosphinate with a general structure of formula (III-A), (III-B), (IV-A), (IV-B), (V-A), (V-B), (VI-A), (VI-B), (VI-C), or (VI-D):

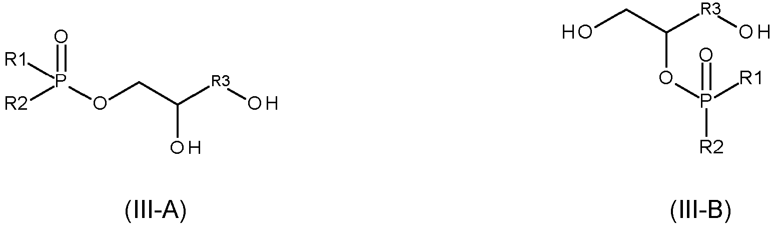

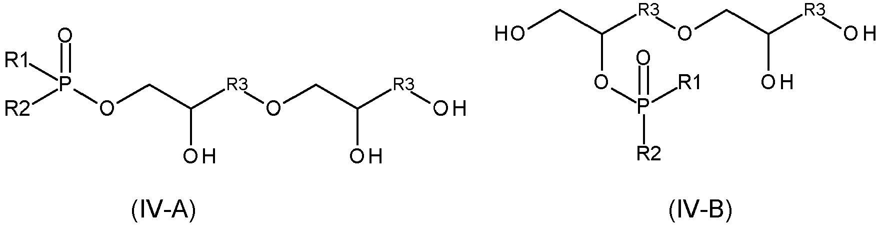

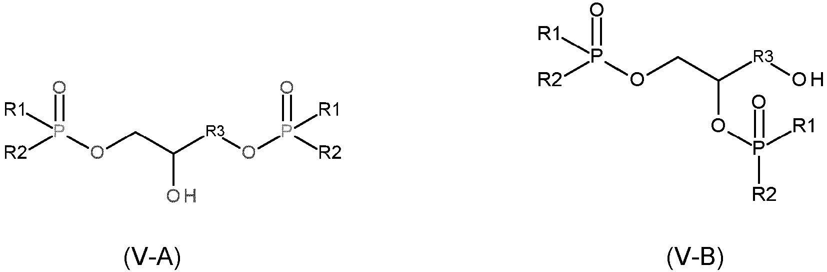

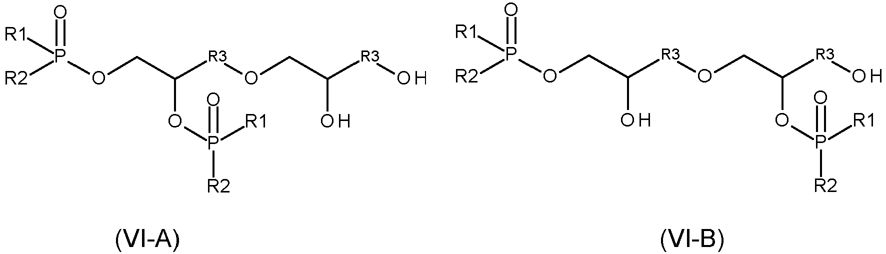

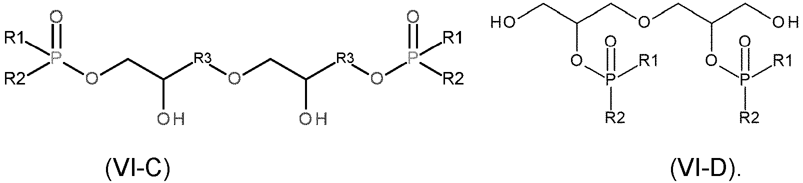

10. Use of the composition of claim 9 as flame retardant.

11. A flame-retardant polymer obtained by reacting monomers and at least one phosphinate of any one of claims 1 - 7 or a composition of claim 9.

12. A flame-retardant polyurethane obtained by reacting a polyol, an isocyanate, and at least one phosphinate of any one of claims 1 - 7 or a composition of claim 9.

13. A flame-retardant polyurethane foam obtained by reacting a polyol, an isocyanate, and a phosphinate of any one of claims 1 - 7 or a composition of claim 9, optionally in the presence of a blowing agent, a foaming catalyst, a foam stabilizer, and/or other additives.

14. A flame-retardant polymer composition, comprising at least one phosphinate of any one of claims 1 - 7 or a composition of claim 9, and a polymer, wherein the polymer is a thermoplastic polymer or a duroplastic polymer and is preferably a polyurethane foam.

15. A process for the preparation of a phosphinate or a composition of phosphinates, comprising the reaction of at least a phosphinic acid of formula (I) with an oxirane of formula (II): 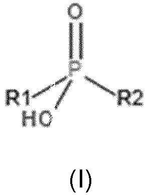 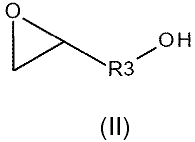 wherein
R1 and R2 are the same or different and independently represent H or a hydrocarbyl radical, with the exception that R1 and R2 may not each be H at the same time and with the hydrocarbyl radical selected from C₁-C₁₀ alkyl, and wherein
R3 is an alkylenyl group which is optionally substituted with a heteroatom selected from O, N and S.

16. The process of claim 15, wherein the molar ratio of the phosphinic acid of formula (I) and the oxirane of formula (II) in the reaction is from 2:1 to 1:2, preferably from 1:1.05 to 1: 1.8.

## Patentansprüche

1. Phosphinat, erhältlich durch Umsetzung mindestens einer Phosphinsäure der Formel (I) mit einem Oxiran der Formel (II): 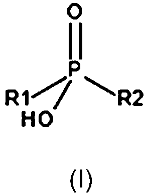 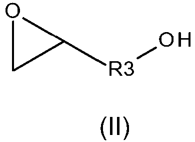 wobei
R1 und R2 gleich oder verschieden sind und unabhängig voneinander H oder einen Kohlenwasserstoffrest darstellen, mit der Ausnahme, dass R1 und R2 nicht gleichzeitig H sein dürfen, und wobei der Kohlenwasserstoffrest aus C₍₁₎-C₁₀-Alkyl ausgewählt ist, und wobei
R3 eine Alkylenylgruppe ist, die gegebenenfalls mit einem Heteroatom, ausgewählt aus O, N und S, substituiert ist,
wobei das Phosphinat eine allgemeine Struktur der Formel (III-A), (III-B), (IV-A), (IV-B), (V-A), (V-B), (VI-A), (VI-B), (VI-C) oder (VI-D) aufweist:

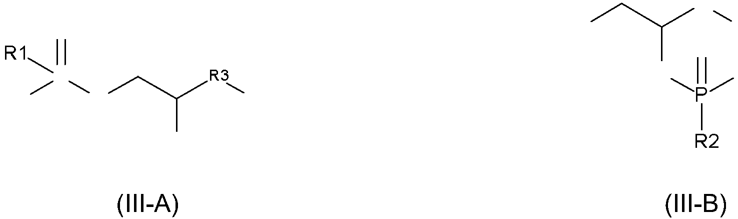

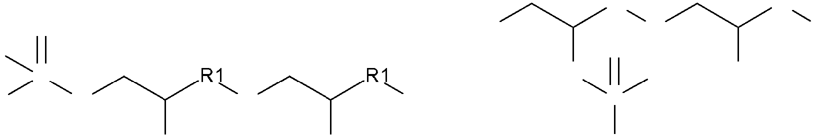

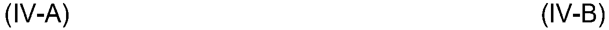

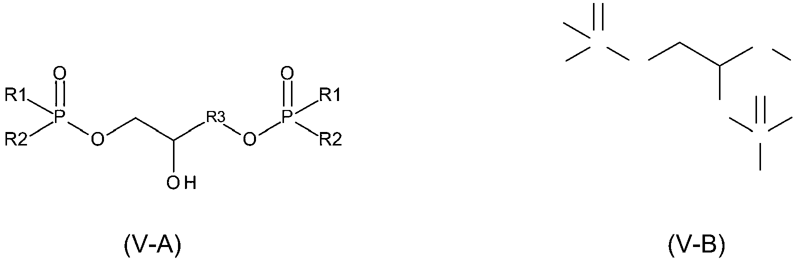

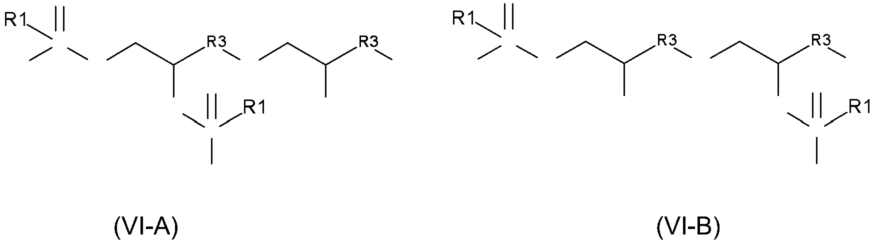

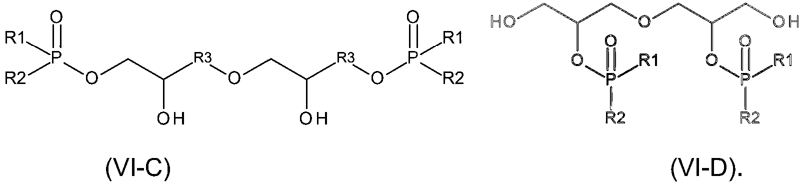

2. Das Phosphinat nach Anspruch 1, wobei R1 und R2 aus C_{(1) -}C₆ -Alkyl ausgewählt sind.

3. Das Phosphinat nach Anspruch 1, wobei einer der Reste R1 und R2 H ist und der andere aus C₁-C₃-Alkyl ausgewählt ist.

4. Das Phosphinat nach einem der Ansprüche 1 bis 3, wobei R3 aus C₁-C₃-Alkylenyl ausgewählt ist.

5. Das Phosphinat nach einem der Ansprüche 1 bis 3, wobei R3 _{CH₂} ist.

6. Phosphinat nach einem der Ansprüche 1 bis 5, **gekennzeichnet durch** einen Phosphorgehalt von mehr als 12 Gew.-%, bezogen auf das Gesamtgewicht des Phosphinats.

7. Das Phosphinat nach Anspruch 1, wobei das Phosphinat eine allgemeine Struktur der Formel (III-A') oder (III-B') aufweist:

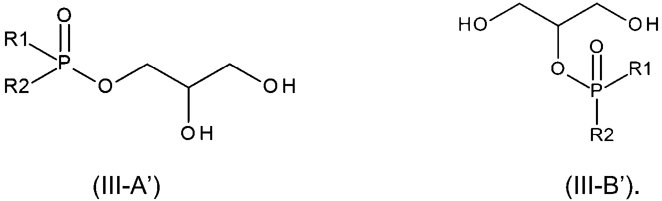

8. Verwendung eines Phosphinats nach einem der Ansprüche 1 bis 7 als Flammschutzmittel.

9. Eine Zusammensetzung aus Phosphinaten, die durch Umsetzung mindestens einer Phosphinsäure der Formel (I) mit einem Oxiran der Formel (II) erhältlich ist oder erhalten wird: 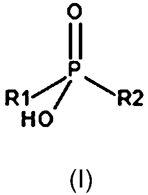 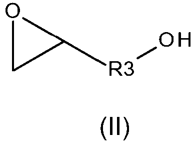 wobei
R1 und R2 gleich oder verschieden sind und unabhängig voneinander H oder einen Kohlenwasserstoffrest stehen, mit der Ausnahme, dass R1 und R2 nicht gleichzeitig H sein dürfen, und wobei der Kohlenwasserstoffrest aus C₁- C₁₀-Alkyl ausgewählt ist, und wobei
R3 eine Alkylenylgruppe ist, die gegebenenfalls mit einem Heteroatom, ausgewählt aus O, N und S, substituiert ist,
wobei die Zusammensetzung mindestens ein Phosphinat mit einer allgemeinen Struktur der Formel (III-A), (III-B), (IV-A), (IV-B), (V-A), (V-B), (VI-A), (VI-B), (VI-C) oder (VI-D) umfasst:

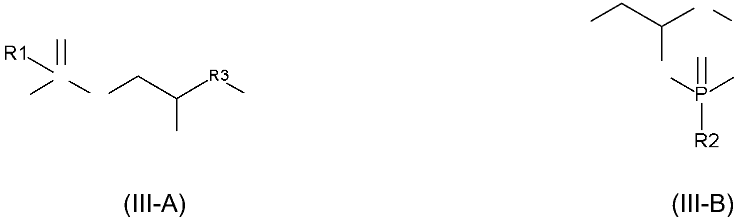

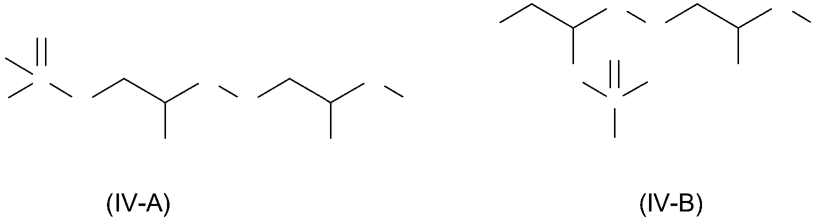

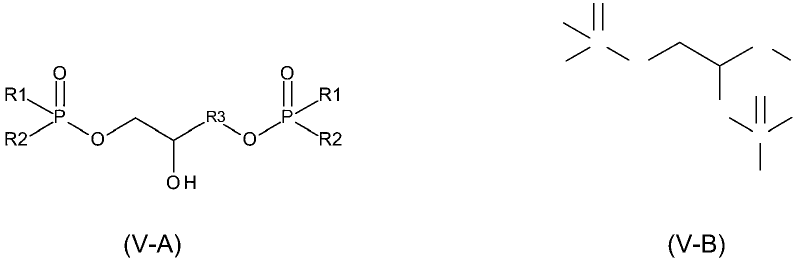

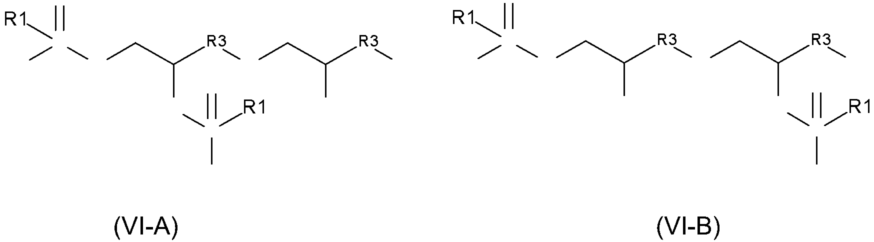

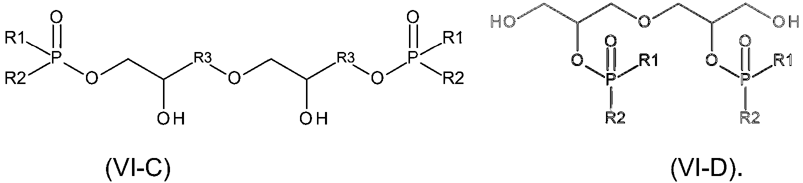

10. Verwendung der Zusammensetzung nach Anspruch 9 als Flammschutzmittel.

11. Ein flammhemmendes Polymer, erhalten durch Umsetzung von Monomeren und mindestens einem Phosphinat gemäß einem der Ansprüche 1 bis 7 oder einer Zusammensetzung gemäß Anspruch 9.

12. Ein flammhemmendes Polyurethan, erhalten durch Umsetzung eines Polyols, eines Isocyanats und mindestens eines Phosphinats gemäß einem der Ansprüche 1 bis 7 oder einer Zusammensetzung gemäß Anspruch 9.

13. Ein flammhemmender Polyurethanschaum, erhalten durch Umsetzung eines Polyols, eines Isocyanats und eines Phosphinats gemäß einem der Ansprüche 1 bis 7 oder einer Zusammensetzung gemäß Anspruch 9, gegebenenfalls in Gegenwart eines Treibmittels, eines Schaumkatalysators, eines Schaumstabilisators und/oder anderer Additive.

14. Eine flammhemmende Polymerzusammensetzung, umfassend mindestens ein Phosphinat gemäß einem der Ansprüche 1 bis 7 oder eine Zusammensetzung gemäß Anspruch 9 sowie ein Polymer, wobei das Polymer ein thermoplastisches Polymer oder ein duroplastisches Polymer ist und vorzugsweise ein Polyurethanschaum ist.

15. Verfahren zur Herstellung eines Phosphinats oder einer Zusammensetzung aus Phosphinaten, umfassend die Umsetzung mindestens einer Phosphinsäure der Formel (I) mit einem Oxiran der Formel (II): 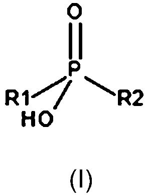 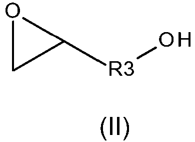 wobei
R1 und R2 gleich oder verschieden sind und unabhängig voneinander H oder einen Kohlenwasserstoffrest darstellen, mit der Ausnahme, dass R1 und R2 nicht gleichzeitig H sein dürfen, und wobei der Kohlenwasserstoffrest aus C₍₁₎₋C₁₀-Alkyl ausgewählt ist, und wobei
R3 eine Alkylenylgruppe ist, die gegebenenfalls mit einem Heteroatom, ausgewählt aus O, N und S, substituiert ist.

16. Verfahren nach Anspruch 15, wobei das Molverhältnis der Phosphinsäure der Formel (I) und dem Oxiran der Formel (II) in der Reaktion 2:1 bis 1:2, vorzugsweise 1:1,05 bis 1:1,8, beträgt.

## Revendications

1. Phosphinate pouvant être obtenu ou obtenu par réaction d'au moins un acide phosphinique de formule (I) avec un oxirane de formule (II) : 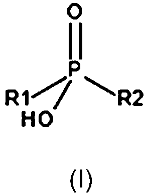 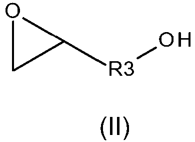 dans laquelle
R1 et R2 sont identiques ou différents et représentent indépendamment H ou un radical hydrocarbyle, à l'exception que R1 et R2 ne peuvent pas être tous deux H en même temps, et le radical hydrocarbyle étant choisi parmi les groupes alkyle en C₁à C₁₀, et dans laquelle
R3 est un groupe alkylényle qui est éventuellement substitué par un hétéroatome choisi parmi O, N et S,
dans laquelle le phosphinate a une structure générale de formule (III-A), (III-B), (IV-A), (IV-B), (V-A), (V-B), (VI-A), (VI-B), (VI-C) ou (VI-D) :

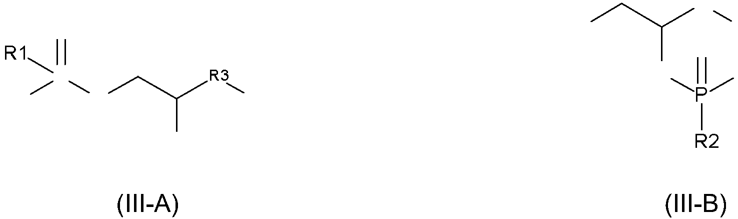

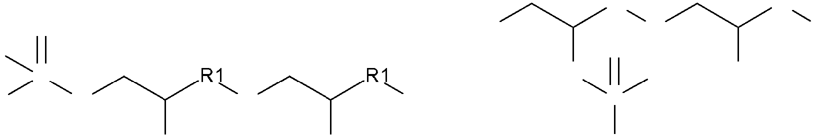

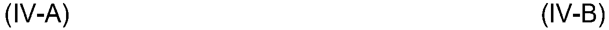

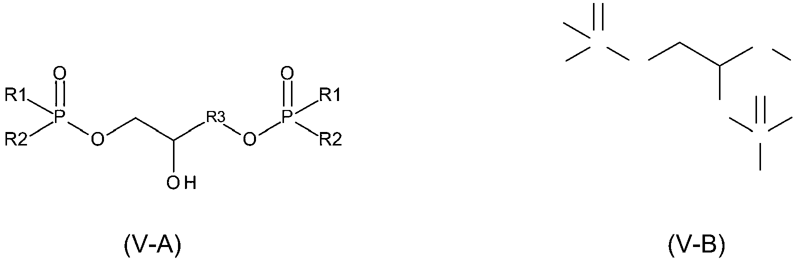

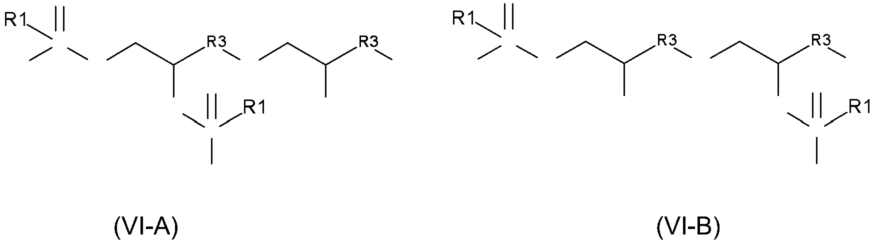

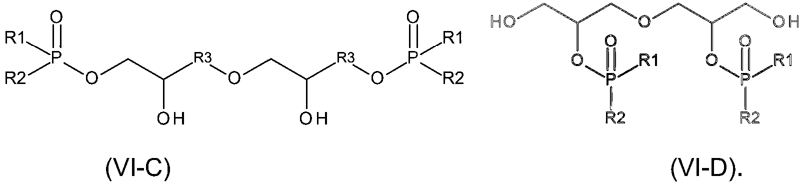

2. Phosphinate selon la revendication 1, dans lequel R1 et R2 sont choisis parmi les groupes alkyle en C_{(1) à}C₆.

3. Phosphinate selon la revendication 1, dans lequel l'un des radicaux R1 et R2 est H et l'autre est choisi parmi les groupes alkyle en C₁à C₃.

4. Phosphinate selon l'une quelconque des revendications 1 à 3, dans lequel R3 est choisi parmi les groupes alkylène en C₁à C₃.

5. Phosphinate selon l'une quelconque des revendications 1 à 3, dans lequel R3 représente CH₂.

6. Phosphinate selon l'une quelconque des revendications 1 à 5, **caractérisé par** une teneur en phosphore supérieure à 12 % en poids par rapport au poids total du phosphinate.

7. Phosphinate selon la revendication 1, dans lequel le phosphinate a une structure générale de formule (III-A') ou (III-B') :

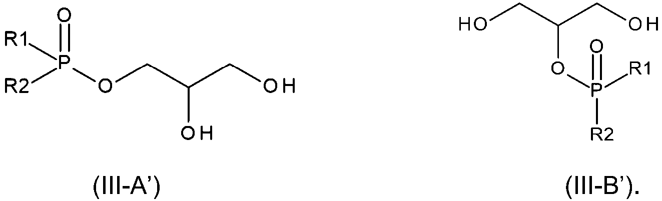

8. Utilisation d'un phosphinate selon l'une quelconque des revendications 1 à 7 en tant qu'agent ignifuge.

9. Composition de phosphinates pouvant être obtenue ou obtenue par réaction d'au moins un acide phosphinique de formule (I) avec un oxirane de formule (II) : 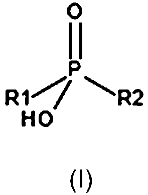 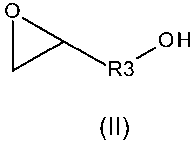 dans laquelle
R1 et R2 sont identiques ou différents et représentent indépendamment H ou un radical hydrocarbyle, à l'exception que R1 et R2 ne peuvent pas être tous deux H en même temps et le radical hydrocarbyle étant choisi parmi les groupes alkyle en C₁à C₁₀, et dans laquelle
R3 est un groupe alkylényle qui est éventuellement substitué par un hétéroatome choisi parmi O, N et S,
la composition comprenant au moins un phosphinate ayant une structure générale de formule (III-A), (III-B), (IV-A), (IV-B), (V-A), (V-B), (VI-A), (VI-B), (VI-C) ou (VI-D) :

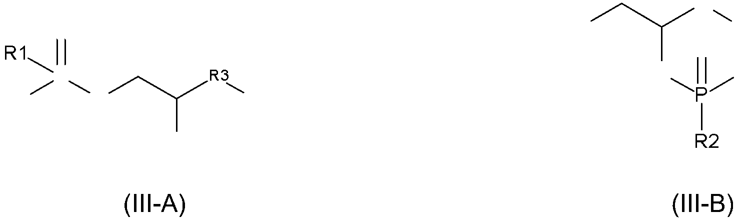

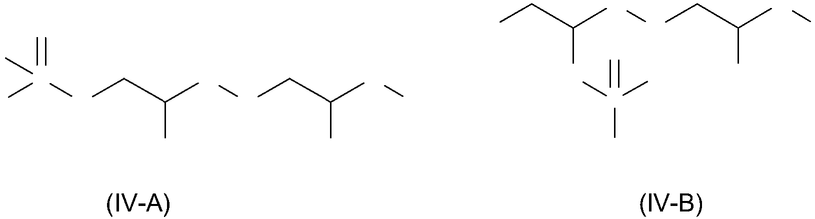

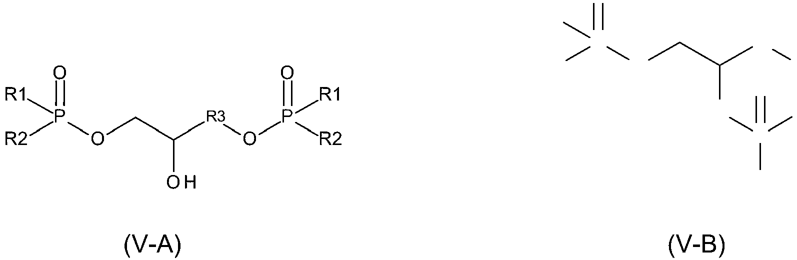

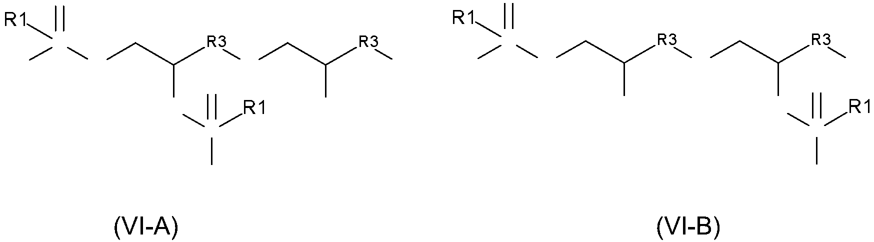

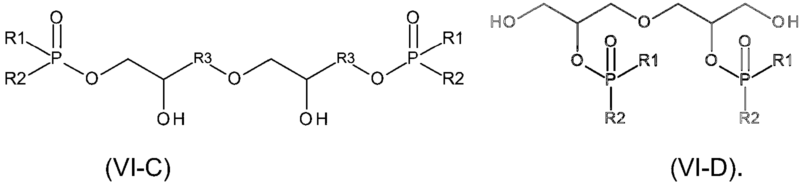

10. Utilisation de la composition selon la revendication 9 comme retardateur de flamme.

11. Polymère ignifuge obtenu par réaction de monomères et d'au moins un phosphinate selon l'une quelconque des revendications 1 à 7 ou d'une composition selon la revendication 9.

12. Polyuréthane ignifuge obtenu par réaction d'un polyol, d'un isocyanate et d'au moins un phosphinate selon l'une quelconque des revendications 1 à 7 ou d'une composition selon la revendication 9.

13. Mousse de polyuréthane ignifuge obtenue par réaction d'un polyol, d'un isocyanate et d'un phosphinate selon l'une quelconque des revendications 1 à 7 ou d'une composition selon la revendication 9, éventuellement en présence d'un agent gonflant, d'un catalyseur de moussage, d'un stabilisateur de mousse et/ou d'autres additifs.

14. Composition polymère ignifuge, comprenant au moins un phosphinate selon l'une quelconque des revendications 1 à 7 ou une composition selon la revendication 9, et un polymère, dans laquelle le polymère est un polymère thermoplastique ou un polymère thermodurcissable et est de préférence une mousse de polyuréthane.

15. Procédé de préparation d'un phosphinate ou d'une composition de phosphinates, comprenant la réaction d'au moins un acide phosphinique de formule (I) avec un oxirane de formule (II) : 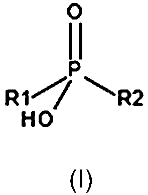 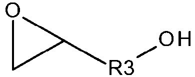 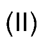 dans laquelle
R1 et R2 sont identiques ou différents et représentent indépendamment H ou un radical hydrocarbyle, à l'exception que R1 et R2 ne peuvent pas être tous deux H en même temps, et le radical hydrocarbyle étant choisi parmi les groupes alkyle en C₁à C₁₀, et dans laquelle
R3 est un groupe alkylényle qui est éventuellement substitué par un hétéroatome choisi parmi O, N et S.

16. Procédé selon la revendication 15, dans lequel le rapport molaire entre l'acide phosphinique de formule (I) et de l'oxirane de formule (II) dans la réaction est compris entre 2:1 et 1:2, de préférence entre 1:1.05 et 1:1.8.
